# EUROPEAN PATENT SPECIFICATION

(11) **EP 2 979 177 B1**
(45) Date of publication and mention of the grant of the patent: **18.04.2018**
(21) Application number: 13880669.0
(22) Date of filing: 27.12.2013
(51) Int. Cl.: G06F 9/45, G06F 21/54

(54) **METHOD FOR CONTROLLING PROCESS OF APPLICATION AND COMPUTER SYSTEM**
VERFAHREN ZUR STEUERUNG EINES ANWENDUNGSPROZESSES UND COMPUTERSYSTEM
MÉTHODE DE GESTION DE PROCESSUS D'APPLICATION ET SYSTÈME INFORMATIQUE

(30) Priority: 25.03.2013 CN 201310098004
(43) Date of publication of application: 03.02.2016
(73) Proprietor: Tencent Technology (Shenzhen) Company Limited, Shenzhen, Guangdong 518000 (CN)
(72) Inventor: YU, Xiao, Shenzhen Guangdong 518000 (CN)
(74) Representative: Eisenführ Speiser
(86) International application number: PCT/CN2013/090722
(87) International publication number: WO 2014/153998

(56) References cited:
- CN-A- 1 310 385
- CN-A- 101 002 177
- CN-A- 101 388 061
- FR-A1- 2 872 605
- US-B1- 6 701 460
- KEN CHIANG ET AL: "A Case Study of the Rustock Rootkit and Spam Bot", USENIX,, 4 April 2007 (2007-04-04), pages 1-8, XP061008861, [retrieved on 2007-04-04]

## Description

This application claims the priority of Chinese Patent Application No. 201310098004.3, entitled "METHOD FOR CONTROLLING PROCESS OF APPLICATION AND COMPUTER SYSTEM", filed with the Chinese Patent Office on March 25, 2013.

### FIELD OF THE DISCLOSURE

The present disclosure relates to the field of computer technology, and particularly to a method for controlling a process of an application and a computer system.

### BACKGROUND

A computer system includes a driving module at a bottom layer and multiple application modules at an upper layer. An Application Programming Interface (API), which may be called by a kernel layer of the system on which the driving modules operate, is a bottom layer interface, and has a high privilege. Each application module may execute the process of the application according to the codes in a corresponding memory space.

If a certain application module wants to control a process of another application which is executed by another application module, this application module will insert into the process of the other application codes stored in a memory space corresponding to this application module. In this way, the codes are executed by the other application module, thereby achieving the control for the process of the application. However, during the specific implementation, there are various code injecting failures caused by various problems, for example, the privilege of the application module is too low, or the operation for injecting codes is considered as a dangerous operation and thus is intercepted.

K. Chiang and L. Lloyd, "A Case Study of the Rustock Rootkit and Spam Bot", USENIX, April 2007, presents a case study of the steps leading up to the extraction of the spam bot payload found within a backdoor rootkit known as Backdoof.Rustock.B or Spam-Mailbot.c. Following the extraction of the spam module the analysis focuses on the steps necessary to decrypt the communications between the command and control server and infected hosts. Part of the discussion involves a method to extract the encryption key from within the malware binary and use that to decrypt the communications. The result is a better understanding of an advanced botnet communications scheme.

FR 2 872 605 A1 relates to a method for managing a software application operating in a multi-computer architecture (cluster). The management applies, for example, to the analysis or modification of its execution environment, in a manner that is as transparent as possible with respect to the application. The management is applied to operations of analysis, capture and restoration of the state of one or more processes of the application. These operations use a controller external to the application which performs an injection of system call instructions within the working memory of the process(es) to be managed.

### SUMMARY

A method for controlling a process of an application and a computer system are provided according to embodiments of the disclosure, which may effectively inject codes into a process of an application and achieve the control for the process of the application.

A method for controlling a process of the application is provided according to embodiments of the disclosure, which is applied in a computer system including a driving module and multiple application modules. The method includes:
determining, by the driving module, a memory space for a process of a first application;
injecting, by the driving module, codes of a second application into the memory space for the process of the first application; and
triggering, by the driving module, a first application module of the multiple application modules to execute the injected codes of the second application in the case that the process of the first application is executed;
wherein the determining, by the driving module, a memory space for a running process of a first application comprises:
   calling a process attaching function by the driving module.

A computer system is provided according to embodiments of the disclosure, which includes a driving module and multiple application modules, the driving module includes:
a memory determining unit adapted to determine a memory space for a running process of a first application;
a code injecting unit adapted to inject codes of a second application into the memory space for the process of the first application; and
a triggering unit adapted to trigger a first application module of the multiple application modules to execute the injected codes of the second application in the case that the process of the first application is executed;
wherein the memory determining unit is further adapted to call a process attaching function.

When controlling the process of the first application, the driving module in the computer system may first determine the memory space for the process of the first application, inject the codes of the second application into the memory space, and then trigger the first application module in the computer system to execute the process of the first application injected with the codes. Since the driving module has a relatively high calling privilege, the code injecting failure due to a low privilege may be avoided. Since the security of operations of the driving module is determined by the driving module itself, this operation for injecting codes will not be considered as a dangerous operation and will not be intercepted. Therefore, with the method according to the embodiments of the present disclosure, the codes may be effectively injected into the process of the application, and thereby the control for the process of the application is achieved.

### BRIEF DESCRIPTION OF THE DRAWINGS

In order to more clearly illustrate the technical solution in the embodiments of the present disclosure or in the prior art, in the following, accompanying drawings required in the description of the embodiments or the prior art will be introduced simply. Obviously, the accompanying drawings in the following description are just some embodiments of the present disclosure. For those skilled in the art, other accompanying drawings can also be obtained according to these accompany drawings without any creative work.
Figure 1 is a flow chart of a method for controlling a process of an application according to an embodiment of the present disclosure;
Figure 2 is a flow chart of a method for controlling a process of an application according to an embodiment of the present disclosure;
Figure 3 is a schematic structural diagram of a computer system according to an embodiment of the present disclosure;
Figure 4 is a schematic structural diagram of another computer system according to an embodiment of the present disclosure; and
Figure 5 is a schematic structural diagram of a terminal to which the method for controlling the process of the application is applied according to an embodiment of the present disclosure.

### DETAILED DESCRIPTION

In the following, the technical solution in the embodiments of the present disclosure will be described clearly and completely in conjunction with the accompanying drawings in the embodiments of the present disclosure. Obviously, the described embodiments are just a part of embodiments of the present disclosure, and are not all embodiments. All other embodiments obtained by those skilled in the art based on the embodiments of the present disclosure without any creative work will fall within the scope of protection of the present disclosure.

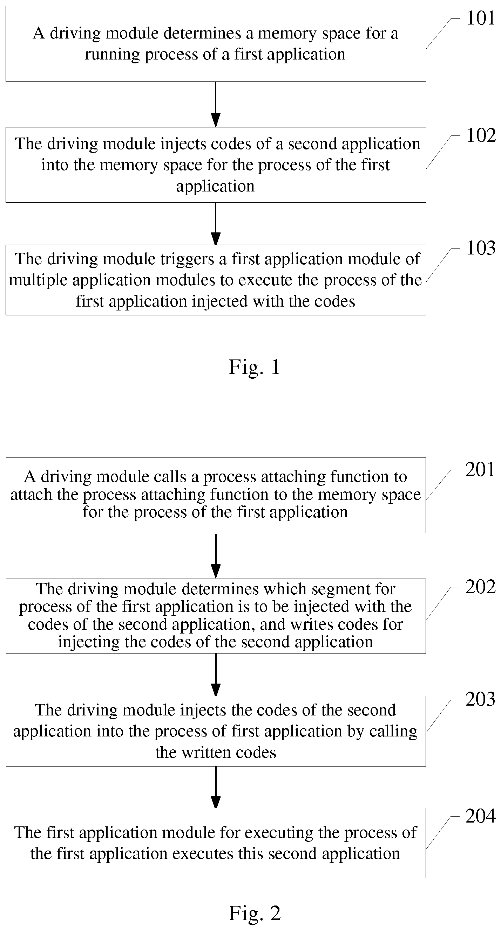

A method for controlling a process of an application is provided according to embodiments of the disclosure, which is mainly applied in a computer system including a driving module, a storage module and multiple application modules. Each application module can execute the process of a corresponding application according to codes in a memory space corresponding to the application module itself. The method according to the present embodiment is performed by this computer system for a running process of an application. A flow for the method is shown in Figure 1, which includes the steps 101-103.

In Step 101, the driving module in the computer system determines a memory space for a process of a first application that is running. Each application module can only execute codes of an application in its memory space. If it is needed to control a process of a certain application (for example a first application), for example control a process of another application (for example starting another application) to be executed during a playing process of music, the driving module needs to determine the memory space for the process of this application. The process of the application refers to an active application. That is, the driving module has put codes of the application in the corresponding memory space, i.e. the process occupies some system resources. An application is called "program" before being called into a memory space, and is called "process" after being called and having got resources. One process may include many threads. The memory space corresponding to each application is a space for storing the codes of this application in the storage module, and each application corresponds to a segment of space in the storage module.

Specifically, the driving module can call a process attaching function, i.e. KeAttachProcess function, to attach the process attaching function to the memory space for the process of the first application, so as to know process contexts corresponding to the process of this first application, i.e. the relationship between the functions included in the process of the first application. Then, the driving module may determine which segment for the process of the first application is to be injected with the codes of a second application program.

In Step 102, the driving module injects the codes of the second application into the memory space for the process of the first application. Specifically, the driving module will assign to the codes of the second application a memory subspace in the memory space for the process of the first application which is determined in step 101 (i.e., the memory subspace is a part space of the storage module corresponding to this first application); and store the codes of the second application in the assigned memory subspace. Herein, the memory subspace needs to be included in the memory space for the process of the first application. In this way, the first application module executing the process of the first application may execute the codes in this memory subspace. After this step, the driving module can call a process detaching function, i.e. a KeDetachProcess function, so as to switch out from the memory space for the process of the first application.

The codes injected into the memory subspace are raw codes. The functions in the raw codes are directly called by addressing, which can not be called by the API interface.

In Step 103, the driving module triggers the first application module of the multiple application modules to execute the injected codes of the second application in the case that the process of the first application is executed.

Since the first application module is executing the process of the first application, the drive module needs to perform triggering to allow the first application module to execute the codes injected in step 102. Specifically, the driving module can insert an asynchronous procedure call (APC) function or a hook function into a certain active thread of the first application. The process of each application can include multiple executing flows i.e. active threads. In this way, when executing the active thread, the first application module may call the codes in the memory subspace according to the APC function and the hook function, and may execute the codes.

For example, a process of a certain application includes active threads A, B and C, and the driving module inserts the APC function or the hook function into the active thread B. In this case, the first application module performs the injected codes of the second application while executing the active thread B.

It should be noted that the first application and the second application above does not represent a sequential relation, and only for a purpose of distinguishing between different applications.

When controlling the process of the first application, the driving module in the computer system may first determine the memory space for the process of the first application, inject the codes of the second application into this memory space, and then trigger the first application module in the computer system to execute the process of the first application injected with the codes. Since the driving module has a relatively high calling privilege, the code injecting failure due to a low privilege may be avoided. Since the security of operations of the driving module is determined by the driving module itself, this operation for injecting codes will not be considered as a dangerous operation and will not be intercepted. Therefore, with the method according to the embodiment of the present disclosure, the codes may be effectively injected into the process of the application, thereby achieving the control for the process of the application.

In the following, the method of the present embodiment is described by a specific embodiment. In one specific embodiment, if a user wants to achieve certain functions on a computer, but the computer may not start and perform these functions without a relatively high privilege due to User Account Control (UAC). The functions may be achieved by the method according to the embodiment of the present disclosure. In another case, with the method according to the embodiment of the present disclosure, the user may achieve some additional functions in a certain application, for example to achieve, in a browser, a function for protecting a user account for a web or for reading a file or other functions.

Specifically, the user presets the program of the expected function, i.e. the codes of the second application above, in the driving module of the computer. In this case, the driving module may achieve these functions during executing the process of the first application process by controlling the process of the first application (usually a service program) which is being executed by the application module in a computer. The flow chart of the method performed by the driving module is shown in Figure 2.

In Step 201, the driving module of the computer calls the process attaching function, i.e. a KeAttachProcess function, to attach the process attaching function to the memory space for the process of the first application, so as to know the process context corresponding to the process of this first application.

In Step 202, the driving module may determine which segment for the process of the first application is to be injected with the codes of the second application, based on the process context of the first application; and write codes for injecting the codes of the second application.

Specifically, the driving module may first obtain raw codes of the second application, obtain the address of each function in the raw codes, and map the obtained data to a memory subspace in the memory space for the process of the current first application. Further, the driving module separates the process of the first application to insert the codes of the second application. Finally, the driving module creates an event object for the operation of injecting the codes of the second application and a function call object for triggering the execution of the second application.

In Step 203, the driving module injects the codes of the second application into a corresponding process of the first application by calling the written codes.

In Step 204, the first application module for executing the process of the first application executes this second application to achieve the above function expected by the user.

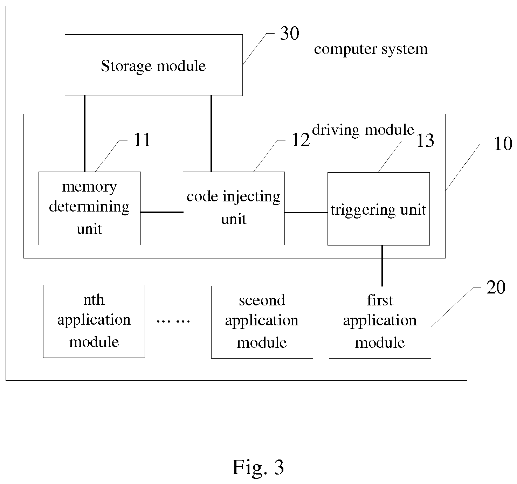

A computer system is provided according to an embodiment of the disclosure. Figure 3 shows the schematic structural diagram of the computer system, which includes a driving module 10, a storage module 30 and multiple application modules (n application modules are shown in the Figure 3). The driving module 10 includes a memory determining unit 11, a code injecting unit 12 and a triggering unit 13.

The memory determining unit 11 is adapted to determine a memory space for a process of a first application that is running. Specifically, this memory determining unit 11 may call a process attaching function to look up for the memory space.

The code injecting unit 12 is adapted to inject codes of a second application into the memory space, which is determined by the memory determining unit 11, for the process of the first application.

Specifically, the memory space is adapted to store the codes of the first application in the storage module 30 of the computer system.

The triggering unit 13 is adapted to trigger a first application module of the multiple application modules to execute the process of the first application injected the codes by the code injecting unit 12. Specifically, the triggering unit 13 can insert an asynchronous procedure call function or a hook function into an active thread of the first application.

Each application module will execute the process of the application according to the codes in a corresponding memory space. The first application module 20 is adapted to execute, under the triggering by the triggering unit 13, the process of the first application injected with the codes. If the triggering unit 13 inserts the APC function or the hook function into the activity thread, the first application module 20 will execute the process of the second application while executing this activity thread.

When the driving module 10 of the computer system according to the embodiment of the present disclosure controls the process of the first application, the memory determining unit 11 firstly determines the memory space for the process of the first application, the code injecting unit 12 inject the codes of the second application into this memory space, and then the triggering unit 13 triggers the first application module 20 in the computer system to execute the process of the first application injected with the codes. Since the driving module has a relatively high calling privilege, the code injecting failure due to a low privilege may be avoided. Since the security of the driving module operation is determined by the driving module itself, this operation for injecting codes will not be considered as a dangerous operation and thus will not be intercepted. Thus, with the computer system according to the embodiment of the present disclosure, the codes may be effectively injected into the process of the application to achieve the control for the process of the application.

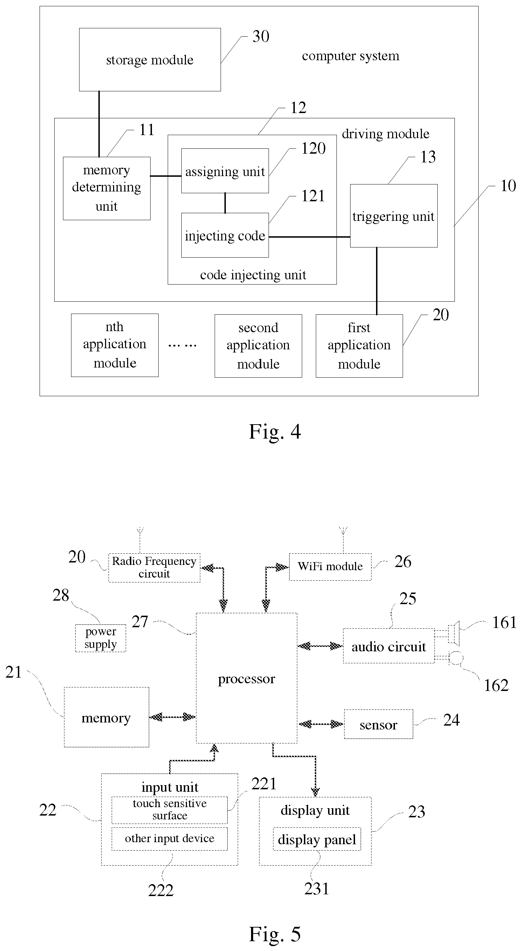

Referring to Figure 4, in an embodiment, the code injecting unit 12 of the driving module in the computer system may specifically be achieved by an assigning unit 120 and an injecting unit 121.

The assigning unit 120 is adapted to assign a memory subspace in the memory space for the process of the first application to the codes of the second application.

The injecting unit 121 is adapted to store the codes of the second application in the assigned memory subspace.

In an embodiment of the present disclosure, after the memory determining unit 11 determines the memory space for the process of the first application, the assigning unit 120 of the code injecting unit 12 assigns a memory subspace in this memory space to the codes of the second application, and the injecting unit 121 stores the codes of the second application in the memory subspace assigned by the assigning unit 120, thereby achieving the code injection. Finally, the triggering unit 13 triggers the first application module 20 to execute the process of the second application which is injected into the memory subspace by the injecting unit 121.

In the following, for example, the method for controlling a process of an application according to the embodiments of the present disclosure is applied to a terminal. The terminal may be a smart phone, a panel computer, an ebook reader, a Moving Picture Experts Group Audio Layer III (MP3) player, a Moving Picture Experts Group Audio Layer IV (MP4) player, a laptop portable computer, a desktop computer and so on.

Reference is made to Figure 5 which shows a schematic structural diagram of a terminal according to an embodiment of the present disclosure.

The terminal may include: a Radio Frequency (RF) circuit 20, a memory 21 including one or more computer readable storage mediums, an input unit 22, a display unit 23, a sensor 24, an audio circuit 25, a wireless fidelity (WiFi) module 26, a processor 27 including one or more processing cores, a power supply 28 and so on. Those skilled in the art can understand that the terminal is not limited to a structure of the terminal shown in Figure 5, and may include more components or less components than the illustrated structure, a combination of the components, or a different arrangement of the components.

The RF circuit 20 may be adapted to receive and send information, or receive or send a signal in a calling procedure. Specifically, the RF circuit 20 receives downlink information from a base station, and transmits the information to one or more processors 27 to process. In addition, the RF circuit 20 sends uplink data to the base station. Normally, the RF circuit 20 includes but not limited to an antenna, at least one amplifier, a tuner, one or more oscillators, a Subscriber Identity Module (SIM) card, a transceiver, a coupler, a Low Noise Amplifier (LNA), a duplexer and so on. Furthermore, the RF circuit 20 may also communicate with a network or other devices via a wireless communication. The wireless communication may be operated in any communication standard or protocol, which includes but not limited to a Global System of Mobile communication (GSM), a General Packet Radio Service (GPRS), a Code Division Multiple Access (CDMA), a Wideband Code Division Multiple Access (WCDMA), a Long Term Evolution (LTE), an e-mail, a Short Messaging Service (SMS) and so on.

The memory 21 may be adapted to store software programs or modules. The processor 27 is adapted to perform various function application and data processing by running the software programs or modules stored in the memory 21. The memory 21 may mainly include a program memory area and a data memory area. Specifically, the program memory area may store an operating system, an application required by at least one function (such as a sound playing function, an image playing function) and so on. The data memory area may store data (such as audio data, a phone book) created according to terminal utilization, and so on. Furthermore, the memory 21 may be a high speed random access memory, and may also be a nonvolatile memory such as at least one magnetic disk memory device, a flash memory device or other volatile solid state memory device. Accordingly, the memory 21 may also include a memory controller for providing an access of the processor 27 and the input unit 22 to the memory 21.

The input unit 22 may be adapted to receive digital information or character information that is input; and generate a signal input from a keyboard, a mouse, a joystick or a trackball, which relates to the user settings and the function control. Specifically, in an embodiment, the input unit 22 may include a touch-sensitive surface 221 and other input devices 222. The touch-sensitive surface 221, also referred to as a touch screen or a touch panel, may collect touch operations operated by the user thereon or in the vicinity thereof, such as operations made by the user using any suitable object or accessory (such as a finger and a touch pen) on the touch-sensitive surface 221 or in the vicinity of the touch-sensitive surface 221; and then may drive a corresponding connection device according to a program set in advance. Optionally, the touch-sensitive surface 221 may include a touch detection device and a touch controller. Specifically, the touch detection device detects a touch position of the user and a signal caused by the touch operation, and sends the signal to the touch controller. The touch controller receives the touch information from the touch detection device, converts the information into coordinates of the contact point, then sends the coordinates of the contact point to the processor 27, and receives a command sent from the processor 27 to perform. Furthermore, the touch-sensitive surface 221 may be realized in multiple ways such as in resistive type, in capacitive type, in infrared type and in surface acoustic wave type. In addition to the touch-sensitive surface 221, the input unit 22 may also include other input devices 222. Specifically, the other input devices 222 may include but not limited to one or more of a physical keyboard, a function key (such as a volume control button, a switch button), a trackball, a mouse, a joystick and so on.

The display unit 23 may be adapted to display information input by the user, information provided to the user and various graphic user interfaces of the terminal. Those graphic user interfaces may include a graphic, a text, an icon, a video and any combination thereof. The display unit 23 may include a display panel 231. Optionally, the display panel 231 may be configured as for example a Liquid Crystal Display (LCD) or an Organic Light-Emitting Diode (OLED) display. Furthermore, the touch-sensitive surface 221 may cover the display panel 231. When the touch-sensitive surface 221 detects a touch operation thereon or in the vicinity thereof, the touch-sensitive surface 221 sends the detected touch operation to the processor 27 to determine a type of the touch event. The processor 27 then provides a corresponding visual output on the display panel 231 according to the type of the touch event. Although the touch-sensitive surface 221 and the display panel 231 are shown as two separate components to realize the input function and the output function respectively in Figure 5, the touch-sensitive surface 221 and the display panel 231 may be integrated together to realize the input and output functions in some embodiments.

The terminal may further include at least one sensor 24 such as a light sensor, a motion sensor and other sensors. Specifically, the light sensor may include an ambient light sensor and a proximity sensor. The ambient light sensor may adjust a brightness of the display panel 231 according to ambient light. The proximity sensor may turn off the display panel 231 and/or a backlight when the terminal is closed to the user's ear. As one of the motion sensors, a gravity acceleration sensor may detect an acceleration value in each direction (generally, in three axial directions), and detect a value and direction of the gravity in a stationary state. The gravity acceleration sensor may be applied to an application (such as orientation change, related games, or magnetometer attitude calibration) for identifying the attitude of a cell phone, a function related to vibration identification (such as a pedometer, or a knock) and so on. Other sensors such as a gyroscope, a barometer, a hygrometer, a thermometer, an infrared sensor, which can be equipped to the terminal, will not be described here any more.

An audio interface between the user and the terminal can be provided by the audio circuit 25, a speaker 251 and a microphone 252. The audio circuit 25 can convert the received audio data into an electrical signal and transmit the electrical signal to the speaker 251; and the speaker 251 converts the electrical signal into a sound signal to output. On the other hand, the microphone 252 converts the collected sound signal into an electrical signal and sends the electrical signal to the audio circuit 25; and the audio circuit 25 converts the received electrical signal into audio data and outputs the audio data to the processor 27 to process. The processed audio data is then sent to for example another terminal via the RF circuit 20 or output to the memory 21 to further process. The audio circuit 25 may also include an earphone jack for providing a communication between a peripheral headphone and the terminal.

The WiFi is a short range wireless transmission technology. The terminal can assist the user to send and receive e-mails, browse a webpage and access a streaming media and so on via the WiFi module 26. The WiFi module 26 provides a wireless broadband internet access to the user. Although the WiFi module 26 is illustrated in Figure 5, it can be understood that the WiFi module 26 is not necessary for the terminal, and can be omitted without changing the scope of essence of the present disclosure.

The processor 27, as a control center of the terminal, is adapted to connect each part of the terminal using various interfaces and wires, and to perform various functions of the terminal and process data by running or executing the software program and/or the software module stored in the memory 21 and calling data stored in the memory 21, thus achieving the monitor of the whole terminal. Optionally, the processor 27 may include one or more processing cores. Preferably, an application processor and a modem processor can be integrated into the processor 27. In the processor 27, the application processor mainly processes the operating system, user interfaces, applications and so on, and the modem processor mainly processes wireless communication. It can be understood that the modem processor described above may not be integrated into the processor 27.

The terminal may further include the power supply 28 (e.g. a battery) for supplying power to each component. Preferably, the power source may be logically connected to the processor 27 via a power supply management system, thus achieving functions such as charge management, discharge management, power consumption management by the power supply management system. The power supply 28 may further include any components, such as one or more DC power supplies or AC power supplies, a recharge system, a power supply fault detection system, a power supply converter or inverter, or a power supply state indicator.

Although not illustrated, the terminal may also include a camera, a Bluetooth module and so on, which are not described here any more. In this embodiment, the processor 27 in the terminal may store, according to the following instructions, the codes of one or more application in the memory 21, and run the application stored in the memory 21 to realize various functions. The instructions include:
determining a memory space for a running process of a first application, which may be achieved by calling a process attaching function.
injecting codes of a second application into the memory space for the process of the first application. Specifically, a memory subspace in the memory space for the process of the first application is firstly assigned to the codes of the second application, and then the codes of the second application are stored in the assigned memory subspace.
triggering a first application module of multiple application modules to execute the process of the first application injected with the codes. Specifically, an asynchronous procedure call function or a hook function is inserted into a certain active thread of the first application.

It should be understood by those skilled in the art that all or a part of steps in various methods in the embodiments described above can be implemented by instructing related hardware using a program, the program can be stored in a computer readable storage medium, the storage medium may include a Read-Only Memory (ROM), a Random Access Memory (RAM), a magnetic disk, an optical disk or the like.

The method for controlling a process of the application and the computer system according to the embodiments of the present disclosure are described in detail above. A principle and the embodiments of the present disclosure have been interpreted by specific examples used herein, and the above description of the embodiments is just used to assist with understanding the method and the core concept of the present disclosure. Meanwhile, for those skilled in the art, changes can be made to the embodiments and the application scope according to the concept of the present disclosure. Therefore, it should be understood that contents in the specification should not be deemed as limitations to the present disclosure.

## Claims

1. A method for controlling a process of an application, wherein the method is applied in a computer system comprising a driving module (10) and a plurality of application modules (20), and the method comprises:
determining, by the driving module (10), a memory space for a running process of a first application;
injecting, by the driving module (10), codes of a second application into the memory space for the process of the first application; and
triggering, by the driving module (10), a first application module (20) of the plurality of application modules (20) to execute the injected codes of the second application in the case that the process of the first application is executed; wherein the determining, by the driving module (10), a memory space for a running process of a first application comprises:
calling a process attaching function by the driving module (10).

2. The method according to claim 1, wherein the injecting, by the driving module (10), codes of a second application into the memory space for the process of the first application comprises:
assigning a memory subspace in the memory space for the process of the first application to the codes of the second application; and
storing the codes of the second application in the assigned memory subspace.

3. The method according to claim 1, wherein the process of the first application comprises a plurality of active threads; and
the triggering, by the driving module (10), a first application module (20) of the plurality of application modules (20) to execute the injected codes of the second application in the case that the process of the first application is executed comprises: inserting, by the driving module (10), an asynchronous procedure call function or a hook function into one of the active threads of the first application.

4. The method according to claim 3, wherein in the case that the active thread is executed, the first application module (20) execute the injected codes of the second application according to the asynchronous procedure call function or the hook function.

5. A computer system, comprising: a processor; a memory; and one or more program units stored in the memory and to be executed by the processor, wherein the one or more program units comprises a driving module (10), a storage module (30) and a plurality of application modules (20), and the driving module (10) comprises:
a memory determining unit (11) adapted to determine a memory space for a running process of a first application;
a code injecting (12) unit adapted to inject codes of a second application into the memory space for the process of the first application; and
a triggering unit (13) adapted to trigger a first application module (20) of the plurality of application modules (20) to execute the injected codes of the second application in the case that the process of the first application is executed;
wherein the memory determining unit (11) is further adapted to call a process attaching function.

6. The computer system according to claim 5, wherein the code injecting unit (12) comprises:
an assigning unit (120) adapted to assign a memory subspace in the memory space for the process of the first application to the codes of the second application; and
an injecting unit (121) adapted to store the codes of the second application in the assigned memory subspace.

7. The computer system according to claim 5, wherein the process of the first application comprises a plurality of active threads; and
the triggering unit (13) is adapted to insert an asynchronous procedure call function or a hook function into one of the active threads of the first application.

8. The computer system according to claim 7, wherein in the case that the active thread is executed, the first application module (20) execute the injected codes of the second application according to the asynchronous procedure call function or the hook function.

9. A non-transitory computer storage medium comprising a computer executable instruction, wherein the computer executable instruction is adapted to perform a method for controlling a process of an application, the method is applied in a computer system comprising a driving module (10) and a plurality of application modules (20), and the method comprises:
determining, by the driving module (10), a memory space for a running process of a first application;
injecting, by the driving module (10), codes of a second application into the memory space for the process of the first application; and
triggering, by the driving module (10), a first application module (20) of the plurality of application modules (20) to execute the injected codes of the second application in the case that the process of the first application is executed;
wherein the determining, by the driving module (10), a memory space for a running process of a first application comprises:
calling a process attaching function by the driving module (10).

10. The non-transitory computer storage medium according to claim 9, wherein the injecting, by the driving module (10), codes of a second application into the memory space for the process of the first application comprises:
assigning a memory subspace in the memory space for the process of the first application to the codes of the second application; and
storing the codes of the second application in the assigned memory subspace.

11. The non-transitory computer storage medium according to claim 9, wherein the process of the first application comprises a plurality of active threads; and
the triggering, by the driving module (10), a first application module (20) of the plurality of application modules (20) to execute the injected codes of the second application in the case that the process of the first application is executed comprises: inserting, by the driving module (10), an asynchronous procedure call function or a hook function into one of the active threads of the first application.

12. The non-transitory computer storage medium according to claim 11, wherein in the case that the active thread is executed, the first application module (20) execute the injected codes of the second application according to the asynchronous procedure call function or the hook function.

## Patentansprüche

1. Verfahren zum Steuern eines Prozesses einer Anwendung, wobei das Verfahren in einem Computersystem angewandt wird, das ein Treibermodul (10) und eine Mehrzahl von Anwendungsmodulen (20) umfasst, und wobei das Verfahren umfasst:
Bestimmen, durch das Treibermodul (10), eines Speicherraums für einen laufenden Prozess einer ersten Anwendung;
Einspeisen, durch das Treibermodul (10), von Codes einer zweiten Anwendung in den Speicherraum für den Prozess der ersten Anwendung; und
Triggern, durch das Treibermodul (10), eines ersten Anwendungsmoduls (20) der Mehrzahl von Anwendungsmodulen (20), um die eingespeisten Codes der zweiten Anwendung in dem Fall auszuführen, dass der Prozess der ersten Anwendung ausgeführt wird; wobei das Bestimmen, durch das Treibermodul (10), eines Speicherraums für einen laufenden Prozess einer ersten Anwendung umfasst:
Aufrufen einer Prozess-Attach-Funktion durch das Treibermodul (10).

2. Verfahren nach Anspruch 1, wobei das Einspeisen, durch das Treibermodul (10), von Codes einer zweiten Anwendung in den Speicherraum für den Prozess der ersten Anwendung umfasst:
Zuweisen eines Speicherunterraums in dem Speicherraum für den Prozess der ersten Anwendung zu den Codes der zweiten Anwendung; und
Speichern der Codes der zweiten Anwendung in den zugewiesenen Speicherunterraum.

3. Verfahren nach Anspruch 1, wobei der Prozess der ersten Anwendung eine Mehrzahl von aktiven Threads umfasst; und
das Triggern, durch das Treibermodul (10), eines ersten Anwendungsmoduls (20) der Mehrzahl von Anwendungsmodulen (20) zum Ausführen der eingespeisten Codes der zweiten Anwendung in dem Fall, dass der Prozess der ersten Anwendung ausgeführt wird, umfasst: Einfügen, durch das Treibermodul (10), einer asynchronen Prozeduraufruffunktion oder einer Hook-Funktion in einen der aktiven Threads der ersten Anwendung.

4. Verfahren nach Anspruch 3, wobei in dem Fall, dass der aktive Thread ausgeführt wird, das erste Anwendungsmodul (20) die eingespeisten Codes der zweiten Anwendung entsprechend der asynchronen Prozeduraufruffunktion oder der Hook-Funktion ausführt.

5. Computersystem, umfassend: einen Prozessor; einen Speicher; und ein oder mehrere Programmeinheiten, die in dem Speicher gespeichert sind und durch den Prozessor auszuführen sind, wobei die eine oder mehreren Programmeinheiten ein Treibermodul (10), ein Speichermodul (30) und eine Mehrzahl von Anwendungsmodulen (20) umfassen, und wobei das Treibermodul (10) umfasst:
eine Speicherbestimmungseinheit (11), die angepasst ist, einen Speicherraum für einen laufenden Prozess einer ersten Anwendung zu bestimmen;
eine Codeeinspeiseeinheit (12), die angepasst ist, Codes einer zweiten Anwendung in den Speicherraum für den Prozess der ersten Anwendung einzuspeisen; und
eine Triggereinheit (13), die angepasst ist, ein erstes Anwendungsmodul (20) der Mehrzahl von Anwendungsmodulen (20) zu triggern, um die eingespeisten Codes der zweiten Anwendung in dem Fall auszuführen, dass der Prozess der ersten Anwendung ausgeführt wird;
wobei die Speicherbestimmungseinheit (11) des Weiteren angepasst ist, eine Prozess-Attach-Funktion aufzurufen.

6. Computersystem nach Anspruch 5, wobei die Codeeinspeiseeinheit (12) umfasst:
eine Zuweisungseinheit (120), die angepasst ist, einen Speicherunterraum in dem Speicherraum für den Prozess der ersten Anwendung zu den Codes der zweiten Anwendung zuzuweisen; und
eine Einspeiseeinheit (121), die angepasst ist, die Codes der zweiten Anwendung in dem zugewiesenen Speicherunterraum zu speichern.

7. Computersystem nach Anspruch 5, wobei der Prozess der ersten Anwendung eine Mehrzahl von aktiven Threads umfasst; und
die Triggereinheit (13) angepasst ist, eine asynchrone Prozeduraufruffunktion oder eine Hook-Funktion in einen der aktiven Threads der ersten Anwendung einzufügen.

8. Computersystem nach Anspruch 7, wobei in dem Fall, dass der aktive Thread ausgeführt wird, das erste Anwendungsmodul (20) die eingespeisten Codes der zweiten Anwendung entsprechend der asynchronen Prozeduraufruffunktion oder der Hook-Funktion ausführt.

9. Nicht-flüchtiges Computerspeichermedium, das eine computerausführbare Instruktion umfasst, wobei die computerausführbare Instruktion angepasst ist, ein Verfahren zum Steuern eines Prozesses einer Anwendung auszuführen, wobei das Verfahren in einem Computersystem angewendet wird, das ein Treibermodul (10) und eine Mehrzahl von Anwendungsmodulen (20) umfasst, und wobei das Verfahren umfasst:
Bestimmen, durch das Treibermodul (10), eines Speicherraums für einen laufenden Prozess einer ersten Anwendung;
Einspeisen, durch das Treibermodul (10), von Codes einer zweiten Anwendung in den Speicherraum für den Prozess der ersten Anwendung; und
Triggern, durch das Treibermodul (10), eines ersten Anwendungsmoduls (20) der Mehrzahl von Anwendungsmodulen (20), um die eingespeisten Codes der zweiten Anwendung in dem Fall auszuführen, dass der Prozess der ersten Anwendung ausgeführt wird;
wobei das Bestimmen, durch das Treibermodul (10), eines Speicherraums für einen laufenden Prozess einer ersten Anwendung umfasst:
Aufrufen einer Prozess-Attach-Funktion durch das Treibermodul (10).

10. Nicht-flüchtiges Computerspeichermedium nach Anspruch 9, wobei das Einspeisen, durch das Treibermodul (10), von Codes einer zweiten Anwendung in dem Speicherraum für den Prozess der ersten Anwendung umfasst:
Zuweisen eines Speicherunterraums in dem Speicherraum für den Prozess der ersten Anwendung zu den Codes der zweiten Anwendung; und
Speichern der Codes der zweiten Anwendung in den zugewiesenen Speicherunterraum.

11. Nicht-flüchtiges Computerspeichermedium nach Anspruch 9, wobei der Prozess der ersten Anwendung eine Mehrzahl von aktiven Threads umfasst; und
das Triggern, durch das Treibermodul (10), eines ersten Anwendungsmoduls (20) der Mehrzahl von Anwendungsmodulen (20), um die eingespeisten Codes der zweiten Anwendung in dem Fall auszuführen, dass der Prozess der ersten Anwendung ausgeführt, wird, umfasst: Einfügen, durch das Treibermodul (10), einer asynchronen Prozeduraufruffunktion oder einer Hook-Funktion in einen der aktiven Threads der ersten Anwendung.

12. Nicht-flüchtiges Computerspeichermedium nach Anspruch 11, wobei in dem Fall, dass der aktive Thread ausgeführt wird, das erste Anwendungsmodul (20) die eingespeisten Codes der zweiten Anwendung entsprechend der asynchronen Prozeduraufruffunktion oder der Hook-Funktion ausführt.

## Revendications

1. Procédé de commande d'un processus d'une application, dans lequel le procédé est appliqué dans un système informatique comprenant un module pilote (10) et une pluralité de modules d'application (20), et le procédé comprend:
faire déterminer, par le module pilote (10), un espace mémoire pour un processus en déroulement d'une première application;
faire injecter, par le module pilote (10), des codes d'une deuxième application dans l'espace mémoire pour le processus de la première application, et
faire déclencher, par le module pilote (10), un premier module d'application (20) de la pluralité de modules d'application (20) pour exécuter les codes injectés de la deuxième application dans le cas où le processus de la première application est exécuté; dans lequel la détermination, par le module pilote (10), d'un espace mémoire pour un processus en déroulement d'une première application comprend:
faire appeler, par le module pilote (10), une fonction d'attache de processus.

2. Procédé selon la revendication 1, dans lequel l'injection, par le module pilote (10), de codes d'une deuxième application dans l'espace mémoire pour le processus de la première application comprend:
assigner un sous-espace de mémoire dans l'espace mémoire pour le processus de la première application aux codes de la deuxième application; et
mémoriser les codes de la deuxième application dans le sous-espace de mémoire assigné.

3. Procédé selon la revendication 1, dans lequel le processus de la première application comprend une pluralité de threads actifs; et
le déclenchement, par le module pilote (10), d'un premier module d'application (20) de la pluralité de modules d'application (20) pour exécuter les codes injectés de la deuxième application dans le cas où le processus de la première application est exécuté comprend: l'insertion, par le module pilote (10), d'une fonction d'appel de procédure asynchrone ou d'une fonction hook dans l'un des threads actifs de la première application.

4. Procédé selon la revendication 3, dans lequel, dans le cas où le thread actif est exécuté, le premier module d'application (20) exécute les codes injectés de la deuxième application en fonction de la fonction d'appel de procédure asynchrone ou de la fonction hook.

5. Système informatique comprenant: un processeur; une mémoire et une ou plusieurs unités de programme mémorisées dans la mémoire et à exécuter par le processeur, ladite une ou lesdites plusieurs unités de programme comprenant un module pilote (10), un module de stockage (30) et une pluralité de modules d'application (20), et le module pilote (10) comprend:
une unité de détermination de mémoire (11) adaptée pour déterminer un espace mémoire pour un processus en déroulement d'une première application;
une unité d'injection de code (12) adaptée pour injecter des codes d'une deuxième application dans l'espace mémoire pour le processus de la première application; et
une unité de déclenchement (13) adaptée pour déclencher un premier module d'application (20) de la pluralité de modules d'application (20) pour exécuter les codes injectés de la deuxième application dans le cas où le processus de la première application est exécuté;
dans lequel l'unité de détermination de mémoire (11) est en outre adaptée pour appeler une fonction d'attache de processus.

6. Système informatique selon la revendication 5, dans lequel l'unité d'injection de code (12) comprend:
une unité d'assignation (120) adaptée pour assigner un sous-espace de mémoire dans l'espace mémoire pour le processus de la première application aux codes de la deuxième application; et
une unité d'injection (121) adaptée pour stocker les codes de la deuxième application dans le sous-espace de mémoire assigné.

7. Système informatique selon la revendication 5, dans lequel le processus de la première application comprend une pluralité de threads actifs; et
l'unité de déclenchement (13) est adaptée pour insérer une fonction d'appel de procédure asynchrone ou une fonction hook dans l'un des threads actifs de la première application.

8. Système informatique selon la revendication 7, dans lequel, dans le cas où le thread actif est exécuté, le premier module d'application (20) exécute les codes injectés de la deuxième application en fonction de la fonction d'appel de procédure asynchrone ou de la fonction hook.

9. Support de stockage informatique non volatile comprenant une instruction exécutable par ordinateur, dans lequel l'instruction exécutable par ordinateur est adaptée pour mettre en oeuvre un procédé de commande d'un processus d'une application, le procédé est appliqué dans un système informatique comprenant un module pilote (10) et une pluralité de modules d'application (20), et dans lequel le procédé comprend:
faire déterminer, par le module pilote (10), un espace mémoire pour un processus en déroulement d'une première application;
faire injecter, par le module pilote (10), des codes d'une deuxième application dans l'espace mémoire pour le processus de la première application, et
faire déclencher, par le module pilote (10), un premier module d'application (20) de la pluralité de modules d'application (20) pour exécuter les codes injectés de la deuxième application dans le cas où le processus de la première application est exécuté;
dans lequel la détermination, par le module pilote (10), d'un espace mémoire pour un processus en déroulement d'une première application comprend:
faire appeler, par le module pilote (10), une fonction d'attache de processus.

10. Support de stockage informatique non volatile selon la revendication 9, dans lequel l'injection, par le module pilote (10), de codes d'une deuxième application dans l'espace mémoire pour le processus de la première application comprend:
assigner un sous-espace de mémoire dans l'espace mémoire pour le processus de la première application aux codes de la deuxième application; et
stocker les codes de la deuxième application dans le sous-espace de mémoire assigné.

11. Support de stockage informatique non volatile selon la revendication 9, dans lequel le processus de la première application comprend une pluralité de threads actifs; et
le déclenchement, par le module pilote (10), d'un premier module d'application (20) de la pluralité de modules d'application (20) pour exécuter les codes injectés de la deuxième application dans le cas où le processus de la première application est exécuté comprend: l'insertion, par le module pilote (10), d'une fonction d'appel de procédure asynchrone ou d'une fonction hook dans l'un des threads actifs de la première application.

12. Support de stockage informatique non volatile selon la revendication 11, dans lequel, dans le cas où le thread actif est exécuté, le premier module d'application (20) exécute les codes injectés de la deuxième application en fonction de la fonction d'appel de procédure asynchrone ou de la fonction hook.
